# DEMANDE DE BREVET EUROPEEN

(11) **EP 2 019 370 A2**
(43) Date de publication de la demande: **28.01.2009**
(21) Numéro de dépôt: 08160651.9
(22) Date de dépôt: 17.07.2008
(51) Int. Cl.: G06Q 10/00, G06Q 50/00

(54) **Système de localisation et d'identification de proximité dans un golf**

(30) Priorité: 19.07.2007 FR 0756627
(71) Demandeur: Way Up, 69580 Sathonay Camp (FR)
(72) Inventeur: Bonnaire, Laurent, 69580 Sathonay Camp (FR)
(74) Mandataire: Tetaz, Franck Claude Edouard

(57) **Abrégé**

L'invention concerne un système de localisation et d'identification d'au moins un joueur sur un parcours de golf, le système comprenant au moins un transpondeur (50, 60, 70, 80, 90, 100) d'identification miniature autonome opérant par communication sans fil de proximité, dans lequel est mémorisé un identifiant, placé sur le joueur et/ou sur son équipement pour sa localisation et son identification, au moins une borne fixe (10, 20, 30) comprenant un circuit d'interrogation sans fil du transpondeur, à zone de couverture limitée, pour recevoir l'identifiant émis par ledit transpondeur, un serveur central (40), et des moyens de communication sans fil entre la ou chaque borne et le serveur central, aptes à véhiculer à partir de la ou chaque borne vers le serveur central un identifiant reçu par son circuit d'interrogation.

## Description

La présente invention concerne le domaine des systèmes de localisation et d'identification, notamment d'individus sur un parcours de golf.

### ETAT DE LA TECHNIQUE

On connaît déjà des systèmes de localisation et d'identification d'individus sur un parcours de golf.

Conventionnellement, un tel système est basé sur la technologie GPS (Global Positioning System), et permet la localisation et l'identification des joueurs sur un parcours de golf.

Un tel système comprend une station de base (située au club-house) et des récepteurs GPS mobiles qui coopèrent avec les satellites GPS.

Au départ du parcours de golf, un ordinateur portable (ou Smartphone, Tablet PC, PDA...) avec récepteur GPS associé (l'ensemble étant nommé pour la circonstance : récepteur GPS mobile) est attribué à chaque golfeur.

Chaque récepteur GPS mobile présente un identifiant unique qui lui est associé, ce qui permet l'identification de chaque golfeur.

L'association du récepteur GPS mobile et de la station de base permet en outre la localisation de chaque golfeur sur le parcours.

Toutefois, un tel système présente de nombreux inconvénients.

Notamment, le récepteur GPS mobile est un élément lourd et encombrant pouvant gêner le golfeur lors de sa partie de golf.

Par ailleurs, la gestion de tels récepteurs GPS mobiles est lourde puisque ces récepteurs nécessitent d'être entretenus (alimentation des batteries par exemple).

De plus, soit ces récepteurs GPS mobiles ne permettent pas l'envoi d'informations aux différents golfeurs présents sur le parcours, soit, lorsqu'ils comprennent des moyens (i.e. liaisons RF) permettant l'envoi d'informations aux différents golfeurs présents sur le parcours, ceux-ci sont très encombrants.

Enfin, ces récepteurs GPS mobiles sont coûteux, et leur vol ou leur perte peut engendrer un coût important dans l'exploitation du golf.

La présente invention vise à pallier tout ou partie des limitations de l'état de la technique décrit ci-dessus, et à proposer un nouveau système qui soit simple, robuste et économe en énergie.

Un autre but de l'invention est de proposer un système de localisation et d'identification permettant la gestion des flux d'individus sur un parcours de golf.

### RESUME DE L'INVENTION

On propose à cet effet un système de localisation et d'identification d'au moins un joueur sur un parcours de golf caractérisé en ce que le système comprend :
au moins un transpondeur d'identification miniature autonome opérant par communication sans fil de proximité, dans lequel est mémorisé un identifiant, placé de façon amovible sur le joueur et/ou sur son équipement pour sa localisation et son identification,
au moins une borne fixe comprenant un circuit d'interrogation sans fil du transpondeur, à zone de couverture limitée, pour recevoir l'identifiant émis par ledit transpondeur,
un serveur central, et
des moyens de communication sans fil entre la ou chaque borne et le serveur central, aptes à véhiculer à partir de la ou chaque borne vers le serveur central un identifiant reçu par son circuit d'interrogation.

Le système selon l'invention est particulièrement adapté pour la gestion du flux de golfeurs - notamment de par le caractère amovible du transpondeur - puisque tous les golfeurs présents sur le parcours peuvent être munis d'un transpondeur passif.

Le fait que le système de localisation comprenne un transpondeur d'identification miniature amovible fourni au joueur et qu'il embarque avec lui avant une partie de golf permet également une gestion des flux d'individus sur un parcours de golf plus efficace. Notamment, l'identification d'un joueur est automatique et n'est pas liée à la saisie par celui-ci d'un identifiant sur des moyens de saisie d'une borne.

Le transpondeur d'identification miniature autonome opérant par communication sans fil de proximité est par exemple une étiquette radio, un transpondeur RFID passif ou comprenant une batterie, ou tout autre transpondeur de petite taille géré par électronique (optoélectronique, reconnaissance vidéo, reconnaissance audio, etc.).

Ainsi, le système selon l'invention présente l'avantage d'être léger, peu encombrant, discret et de faible coût, en ce qui concerne la partie embarquée par l'individu, tout en pouvant offrir des fonctionnalités sophistiquées en matière de transmission et de traitement d'informations.

Des aspects préférés mais non limitatifs du système selon l'invention sont les suivants :
- les moyens de communication sans fil sont également aptes à véhiculer du serveur central vers la ou chaque borne des informations à afficher, et dans lequel la ou chaque borne comprend un dispositif d'affichage pour ces informations ;
- le serveur est apte à engendrer des informations à afficher à destination d'une borne, qui sont déterminées en fonction d'un identifiant reçu par ledit serveur à partir de ladite borne ;
- les informations à afficher comprennent une horaire théorique de passage pour le joueur identifié par ledit identifiant ;
- les informations à afficher peuvent comprendre un horaire de départ à afficher sur des moyens d'affichage d'une borne située par exemple au départ du trou n°1 ; ceci permet notamment de faciliter la gestion des flux de joueurs ;
- les informations comprennent en outre un écart entre ledit horaire théorique et l'horaire effectif auquel l'identifiant a été lu par la borne ;
- les informations à afficher comprennent en outre des instructions aux joueurs ;
- la ou chaque borne fixe comprend une interface d'entrée ;
- l'interface d'entrée permet la saisie d'un score pour transmission vers le serveur central par la borne, et le serveur central comprend un dispositif de tenue à jour de scores en temps réel ou quasi-réel à partir des scores reçus ;
- le système comprend plusieurs bornes prévues dans les zones de départ d'une pluralité de trous du parcours ;
- chaque transpondeur est fixé sur un support choisi dans un groupe comprenant un sac de golf, une voiturette, un vêtement, un accessoire à porter, un badge à fixer sur sac de golf, une carte de score, un justificatif de paiement de droit de jeu ;
- le système comprend en outre un dispositif de pilotage d'irrigation commandé en fonction de la détection de transpondeurs au niveau de la ou des bornes ;
- le système comprend en outre des transpondeurs attachés à des membres du personnel du golf ou des machines d'entretien ;
- la ou chaque borne comprend en outre un dispositif de prise de vues pour transmission vers le serveur central, et en ce que ce dernier est associé à un réseau de télévision local ;
- le transpondeur d'identification miniature autonome opérant par communication sans fil de proximité est un transpondeur d'identification par radiofréquence et le circuit d'interrogation sans fil de la borne fixe est un circuit d'interrogation RFID.

L'invention concerne également un procédé de localisation et d'identification d'au moins un joueur sur un parcours de golf, le procédé comprenant les étapes suivantes :
- prévoir au moins un transpondeur d'identification miniature amovible autonome opérant par communication sans fil de proximité, dans lequel est mémorisé un identifiant, en vue de la localisation ou de l'identification du joueur,
- attacher le transpondeur de façon amovible sur le joueur ou sur un élément de son équipement,
- interroger localement le transpondeur par communication sans fil à courte portée et recevoir l'identifiant au niveau d'au moins une borne fixe,
- communiquer l'identifiant à partir de la ou chaque borne vers un serveur central par communication sans fil à longue portée.

L'étape consistant à attacher le transpondeur de façon amovible sur le joueur ou son équipement peut comprendre la pose du transpondeur sur une carte de droit de jeu, comme par exemple un green fee ou une carte d'abonnement (i.e. macaron).

Avantageusement, le procédé décrit ci-dessus peut comprendre également une étape de communication par les moyens de communication sans fil, du serveur central vers la ou chaque borne du serveur, d'informations à afficher et l'affichage par des moyens d'affichage desdites informations sur la ou chaque borne.

Le procédé peut également comprendre une étape de génération par le serveur central des informations à afficher sur une borne, lesdites informations étant déterminées en fonction d'un identifiant reçu par ledit serveur à partir de ladite borne.

Les informations à afficher peuvent comprendre un horaire théorique de passage pour le joueur identifié par ledit identifiant.

Ces informations peuvent également comprendre un écart entre l'horaire théorique et l'horaire effectif auquel l'identifiant a été lu par la borne, ou des instructions aux joueurs.

Dans une variante de réalisation, le procédé comprend également les étapes de saisie d'un score sur la borne, de transmission du score de la borne vers le serveur central et de mise à jour en temps réel ou quasi réel d'une table de scores à partir des scores reçus.

Le procédé peut également comprendre la fourniture d'une borne dans la zone de départ ou d'une pluralité de bornes au niveau d'une pluralité de trous du parcours.

De préférence, le procédé comprend une étape de fixation de chaque transpondeur sur un support choisi dans un groupe comprenant un sac de golf, une voiturette, un vêtement, un accessoire à porter, un badge à fixer sur un sac de golf, un macaron, une carte de score, un justificatif de paiement de droit de jeu (« green fee »).

Avantageusement, le procédé peut comprendre une étape de pilotage d'irrigation commandé en fonction de la détection de transpondeur au niveau de la ou des bornes.

Dans une autre étape, le procédé peut comprendre la fourniture de transpondeurs d'identification à des membres du personnel du golf ou des machines d'entretien.

Optionnellement, le procédé peut comprendre également une étape de prise de vue par un dispositif de prise de vue de la ou chaque borne, une étape de transmission de la prise de vue vers le serveur central, et une étape d'affichage de la prise de vue sur un réseau de télévision local.

### BREVE DESCRIPTION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 est une représentation schématique du système de localisation et d'identification selon l'invention,
- la figure 2 est une vue en perspective d'une borne fixe du système selon l'invention,
- la figure 3 est une représentation schématique d'informations affichées sur la borne fixe.

### DESCRIPTION DE L'INVENTION

### Principe général

Le système de l'invention vise l'identification et la localisation notamment d'individus sur un parcours de golf.

Pour ce faire, il comprend :
- au moins un transpondeur associé typiquement à un individu à identifier et localiser sur le parcours de golf,
- au moins une borne fixe disposée en un emplacement bien choisi sur le parcours, et
- au moins un serveur distant de la ou des bornes.

Le transpondeur est préférentiellement un transpondeur d'identification radiofréquence RFID passif.

La ou chaque borne fixe comprend une unité centrale de traitement et des périphériques, principalement un dispositif d'affichage, un circuit d'émission/réception pour dialoguer avec le serveur et éventuellement avec d'autres bornes, et un circuit d'interrogation pour activer et écouter le transpondeur lorsque celui-ci est à proximité de la borne. L'unité centrale de traitement est par exemple construite autour des composants d'un ordinateur personnel. Le circuit d'interrogation est apte à émettre un signal d'interrogation du ou des transpondeurs situé dans sa zone de couverture avec une périodicité appropriée, par exemple de l'ordre de la fraction de seconde à quelques secondes. Optionnellement, la borne comprend une interface d'entrée (dispositif tactile superposé au dispositif d'affichage, clavier ou pavé de touches, etc.) permettant de saisir des informations à destination du serveur, notamment la validation d'une personne lors du passage à la borne.

Le serveur est typiquement constitué d'un ordinateur personnel complété par un circuit d'émission/réception permettant d'établir une communication bidirectionnelle avec la ou les bornes fixes. Celle-ci peut être basée sur toute technologie appropriée radiofréquence ou hyperfréquence, en fonction notamment de la portée et du débit recherchés.

Avec un tel système de localisation l'élément embarqué sur l'individu à identifier et localiser est un transpondeur passif qui est petit, léger, discret et très peu coûteux. Par ailleurs, dans le cas d'un transpondeur passif, il ne comprend pas de batterie et donc ne nécessite ni entretien ni recharge.

### Exemple de mise en oeuvre

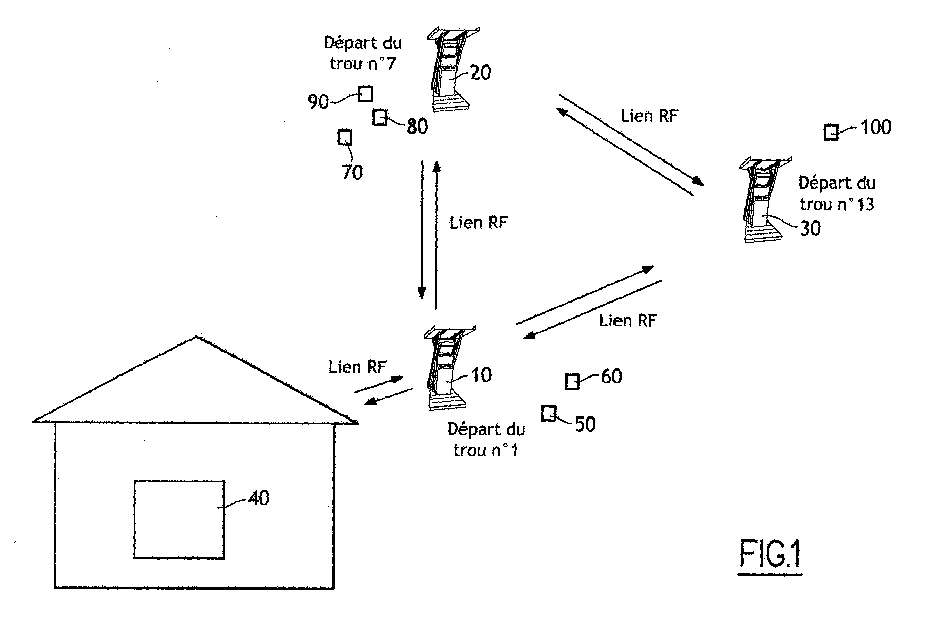

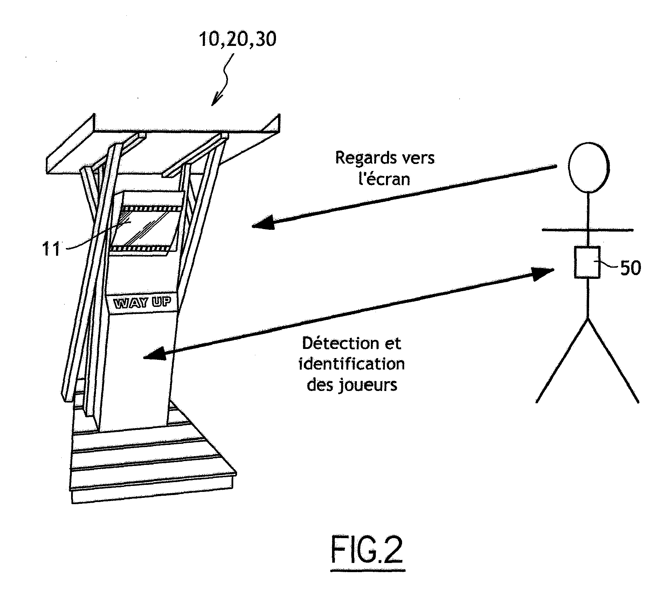

En référence aux figures 1 à 3, on a illustré un exemple de mise en oeuvre du système de localisation et d'identification notamment d'un individu selon l'invention.

Le système comprend trois bornes fixes 10, 20, 30, un serveur 40 et une pluralité de transpondeurs passifs dont six ont été représentés (références 50, 60, 70, 80, 90, 100). On pourrait en variante utiliser des transpondeurs alimentés par une batterie.

Chaque transpondeur passif 50, 60, 70, 80, 90, 100 permet de stocker des informations liées à une identification.

Un tel transpondeur passif 50, 60, 70, 80, 90, 100 est de façon classique en soi un dispositif composé d'un dipôle rayonnant et d'une puce électronique servant de circuit de lecture/écriture et de mémoire de stockage pour les informations d'identification. Il est dit *« passif »* puisqu'il ne possède pas de source d'énergie propre, et peut transmettre l'information qu'il contient en réponse à un signal d'interrogation émis par une borne. Il utilise en effet la puissance du champ électromagnétique du signal d'interrogation, de manière à activer la puce qu'il contient et se servir de son antenne pour transmettre les informations d'identification.

Les transpondeurs passifs 50, 60, 70, 80, 90, 100 peuvent être logés dans ou sur des supports de différentes formes : souples (sous forme d'étiquettes par exemple) ou rigides lorsqu'ils devront être protégés d'éventuels chocs. Ces transpondeurs passifs 50, 60, 70, 80, 90, 100 peuvent être intégrés dans différents objets utilisés par les golfeurs tels que : carte de membre, badge, carte de score, justificatif de droit de jeu (green-fee), ou encore sac, voiturette, chariot, gant, crayon, casquette, ceinture, chaussure, etc. Ces transpondeurs 50, 60, 70, 80, 90, 100 peuvent également être intégrés dans différents objets portés ou utilisés par les membres du personnel du golf tel que : chaussure, uniforme, bracelet, badge, macaron etc. Ils peuvent également être fixés à tout objet ou machine susceptible d'évoluer sur le parcours et dont on souhaite une traçabilité, tel que tondeuse ou autre machine d'entretien.

Les transpondeurs 50, 60, 70, 80, 90, 100 sont utilisés principalement pour permettre l'identification des joueurs présents sur le parcours du golf, pour que chacun de ceux-ci puisse être identifié et localisé sur le parcours.

Chaque transpondeur passif 50, 60, 70, 80, 90, 100 contient à cet effet un numéro d'identification unique, fixé à l'avance ou modifiable.

Comme il a déjà été indiqué plus haut, le système de localisation comprend également des bornes fixes, ici au nombre de trois et référencées 10, 20, 30, munies chacune d'un circuit d'interrogation adapté pour recevoir l'identifiant d'un transpondeur situé dans sa zone de couverture (qui est typiquement de quelques mètres à quelques dizaines de mètres).

Un tel circuit d'interrogation est capable d'activer chacun des transpondeurs passifs 50, 60, 70, 80, 90, 100 et de recevoir l'identifiant correspondant.

Le circuit d'interrogation peut être composés d'une ou plusieurs électroniques d'interrogation et d'une ou plusieurs antennes.

De manière préférée, les transpondeurs et les circuits d'interrogation associés sont par exemple conformes à la norme UHF EPC Gen2. Bien entendu, d'autres normes connues de l'homme de l'art peuvent être utilisées.

Les identifiants collectés par les circuits d'interrogation des bornes sont ensuite envoyés au serveur central 40. Y sont avantageusement associés, comme on le verra en détail plus loin, des informations d'horodatage, engendrées soit au niveau des bornes si elles disposent d'une horloge synchronisée avec le système, soit au niveau du serveur.

Les bornes fixes 10, 20, 30 sont fixées au sol. Elles sont situées sur le parcours de golf, en des points de passage naturellement empruntés par les joueurs.

Par exemple, les bornes 10, 20, 30 peuvent être respectivement situées en bordure de tee de départ de différents trous. Plus précisément, une première borne 10 peut être située en bordure du tee de départ du trou numéro un, une deuxième borne 20 peut être située en bordure du tee de départ du trou numéro sept, et une troisième borne 30 peut être située en bordure du tee de départ du trou numéro treize, dans le cas d'un parcours de dix-huit trous.

En variante, les bornes 10, 20, 30 peuvent être situées le long de chemins empruntés par les golfeurs et menant aux tees de départ.

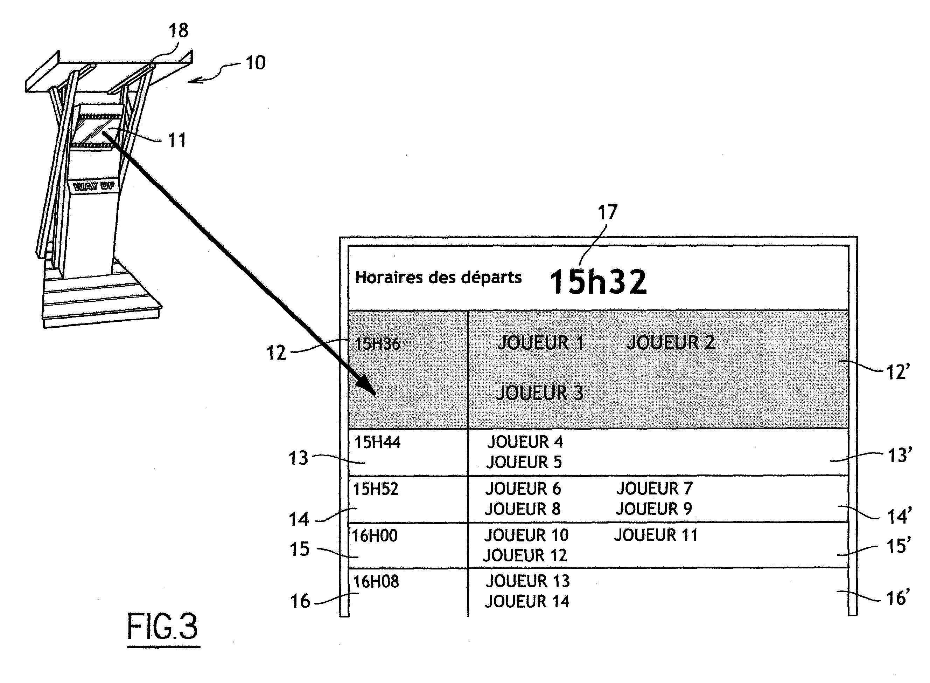

Comme décrit précédemment, chaque borne 10, 20, 30 comprend un dispositif d'affichage 11 tel qu'un écran cathodique, à cristaux liquides, etc. Il permet notamment l'affichage d'informations émises par le serveur 40. Ces informations émises par le serveur 40 et reçues par une borne fixe 10 peuvent comprendre un horaire de passage théorique 12 à un endroit considéré du parcours, comme illustré à la figure 3, ainsi que l'écart (avance ou retard) entre l'horaire de passage réel et cet horaire théorique.

A cet effet, le serveur 40 est apte à calculer, à partir d'une heure de départ connue et attribuée à un jour identifié par son transpondeur, les heures de passage théorique (de telles données étant calculées selon des règles bien connues, et en général fournies par les autorités de tutelle) pour le joueur en question devant les différentes bornes fixes.

Une borne fixe peut afficher soit l'ensemble des horaires de passage de toutes les personnes présentes sur le parcours, soit les horaires de passage 12, 13, 14, 15, 16 associés aux joueurs 12', 13', 14', 15', 16' identifiés grâce à leurs transpondeurs respectifs et situés à proximité de la borne fixe considérée. En particulier, la borne située au départ du trou No. 1 peut afficher les horaires de départ de tous les joueurs, de manière à faciliter l'organisation des départs, que ce soit en compétition ou en partie amicale. Le serveur 40 est alors apte à envoyer à la borne considérée l'ensemble des données nécessaires à l'affichage.

Avantageusement, le serveur 40 peut également émettre en direction des bornes, en vue de leur affichage sur celles-ci, des messages d'alerte ou de prévention à l'attention de l'ensemble des personnes, joueurs ou autres, présentes sur le parcours. Par exemple, ces messages d'alerte peuvent être des bulletins météorologiques informant les golfeurs et/ou les membres du personnel du golf d'une dégradation du temps (risque d'orage), etc.

Le système peut avantageusement engendrer en outre l'affichage sur les bornes d'une horloge synchronisée ou « heure officielle » pour l'ensemble des joueurs passant à proximité des bornes.

Dans un mode de réalisation de l'invention, une borne fixe peut comprendre une caméra, fixe ou pilotable, apte à filmer un joueur de golf sur le parcours

Les images prises par les caméras peuvent être transmises entre bornes ou en direction du serveur 40 pour visualisation sur le dispositif d'affichage qui équipe ce serveur.

Comme on l'a indiqué, plus haut, une borne fixe peut également comprendre une interface d'entrée (écran tactile, clavier, etc.) pour permettre à un joueur de saisir en temps réel des informations telles que son score (ce qui permet de réaliser lors d'une compétition un scoring sans recours à des personnes dédiés qui en général ont leur propre équipement de communication radio) ou encore pour permettre aux membres du personnel du golf de saisir des messages à l'attention d'une personne située au niveau du serveur.

Une interface d'entrée constituée d'un écran tactile permet de limiter l'encombrement de la borne et de contribuer à sa robustesse.

De plus, chaque borne 10, 20, 30 peut comprendre des moyens d'alimentation autonome, tel que des panneaux solaires 18 associés à des batteries rechargeables, une pile à combustible, etc.

Enfin une borne peut comprendre un ou plusieurs haut-parleurs pour la diffusion de messages sonores.

Le serveur 40 est situé par exemple au secrétariat du club-house.

Le fonctionnement et l'utilisation du système de l'invention dans son application au suivi de joueurs sur le parcours est par exemple le suivant.

Avant une partie de golf, chaque joueur embarque avec lui un transpondeur passif qui lui est associé et qui l'identifie de façon unique.

Lorsqu'un joueur arrive à proximité d'une borne 10, 20 ou 30, sa présence est détectée par le circuit d'interrogation. L'information correspondante est immédiatement envoyée au serveur 40, qui mémorise conjointement l'identifiant du joueur, un identifiant unique de la borne et une information d'horodatage.

Le serveur 40 peut alors émettre un message vers la borne 10, 20, 30 commandant l'affichage d'un message à l'attention du joueur en question, ou de son groupe, comme par exemple un message demandant au joueur ou au groupe:
- de se dépêcher s'il est arrivé au niveau de la borne après l'horaire de passage théorique prévu,
- de laisser passer le groupe situé après lui, ou
- de lui adresser des messages nominatifs par exemple à caractère publicitaire.

Le message de la première catégorie est engendré dans le cas où l'horaire de passage du groupe en question est tardif par rapport à son horaire de passage théorique tel que décrit plus haut.

Le message de la seconde catégorie est engendré en fonction d'une analyse des temps de passage des groupes de joueurs aux différentes bornes, et en particulier lorsqu'un groupe a pris un retard excessif par rapport au groupe précédent, et/ou lorsque le groupe suivant s'est sensiblement rapproché du groupe en question.

Le système permet donc la gestion des flux de joueurs sur le parcours, et de lutter contre le jeu lent qui est l'un des fléaux dans la pratique actuelle du jeu de golf (une partie qui devrait se jouer par exemple en 4h15 peut parfois durer jusqu'à 6h). Plus particulièrement, il permet à la fois de détecter le passage des golfeurs à certains points du parcours, de les identifier, de les inciter à l'autodiscipline et de permettre aux membres du personnel du golf d'intervenir.

### Applications

Des applications utiles pour les joueurs et membres du personnel du golf, telles que réalisables avec le système de la présente invention, sont notamment les suivantes :

### Résolution du jeu lent (voir également ci-dessus)

Ce système permet l'affichage nominatif des horaires de départ sur l'écran d'une borne (en particulier celle qui se trouve au départ du trou No. 1), ainsi que l'affichage nominatif des horaires théoriques de passage aux endroits du parcours équipés de bornes. Les avances et les retards des groupes, de façon nominative ou anonyme, peuvent également être signalés. Une horloge affiche l'heure officielle du club de golf, qui est celle du PC du serveur. Le système peut comporter également une fonction d'alerte automatique au club-house, permettant aux membres du personnel du golf d'intervenir en cas d'engorgement sur le parcours (envoi de personnel, commissaire, etc. avec voiturette).

Ce système permet également la prise en compte d'une équipe qui en double une autre dans l'affichage des temps de passage. Comme on l'a indiqué, il permet également d'afficher des messages par exemple demandant à un groupe de joueurs d'accélérer leur partie ou de laisser passer le groupe qui le suit.

### Economie de personnel

Un des métiers du golf (préposé au départ, ou « starter » en terminologie anglo-saxonne) consiste à rester au départ et à ordonner le droit de départ aux joueurs en respectant l'ordre et les horaires.

L'affichage de l'heure commune et des noms des futurs partants incite les joueurs à l'autodiscipline et remplit en grande partie les tâches du préposé au départ dont le club de golf peut ainsi s'affranchir.

### Elimination des départs sauvages

Une personne partant de façon non autorisée peut être repérée immédiatement et un membre du personnel du golf peut ainsi intervenir sans délai auprès de lui. Dans bien des cas, ce genre de départs crée des engorgements sur le parcours. Dans ce cas et afin de limiter les fraudes, on prévoit que le transpondeur soit associé de façon non facilement séparable avec l'équipement du joueur (par exemple intégré à son macaron de membre du club, lui-même fixé de façon difficilement démontable au sac de golf).

### Télévision en réseau

A chaque borne peut être adjointe une caméra fixe ou pilotable. Différentes images d'un trou (exemple : plan 1 : coup de départ, plan 2 : green et ses alentours) peuvent être transmises vers le serveur 40 puis diffusées sur le réseau de télévision intérieur du club. L'accord des joueurs sera sollicité si nécessaire afin de respecter la vie privée et le droit à l'image.

### Pilotage de l'irrigation

Lorsqu'un joueur entre dans la zone de couverture d'une borne située à proximité d'un départ d'un trou, une irrigation en cours sur ce trou peut être interrompue à partir du serveur 40, par exemple pendant une durée prédéterminée correspondant au temps nécessaire au joueur pour passer la zone considérée.

### Sécurité

En cas d'imminence de conditions climatiques dangereuses (foudre, etc.) la localisation des joueurs effectuée par le système permet au personnel d'aller chercher en voiturette ceux qui n'auraient pas lu le message de prévention affiché sur les écrans de bornes ou qui se trouveraient aux endroits les plus lointains du parcours.

Le système permet également de répondre au moins en partie aux exigences de protection du travailleur isolé (PTI) grâce à la localisation possible des équipes de jardiniers sur le parcours, obtenue en équipant chacun d'eux d'un transpondeur.

### Gestion des déplacements des membres du personnel sur le parcours

Les déplacements des membres du personnel de golf munis de transpondeurs passifs sont également traçables, ce qui permet d'optimiser les déplacements demandés, et de passer des messages à ceux-ci via les bornes.

Les intérêts économiques et écologiques (économies d'énergie) sont donc importants.

### Gestion du Parc de voiturettes et de chariots loués

Les voiturettes et les chariots loués par les golfeurs sont tracés au garage et sur le parcours. La gestion dynamique du stock de voiturettes et de chariots facilitera ainsi la gestion des locations au niveau de l'Accueil du Golf.

### Alarmes en cas de circuits non respectés

Comme on l'a vu, le système de l'invention permet de détecter des comportements « anormaux » tels qu'un groupe qui en double un autre, un groupe qui passe directement d'un trou à un autre trou qui n'est pas le suivant dans l'ordre de jeu (joueurs qui « coupent »), un groupe qui fait une pause non prévue, etc.

Il est possible de programmer des alarmes au club-house afin d'attirer l'attention du personnel sur ce type de comportement.

### Analyse comportementale des joueurs et gestion de la restauration

L'interface d'entrée telle qu'écran tactile permet de communiquer à distance avec le personnel situé dans le club-house, par exemple pour émettre un souhait (commande de boissons ou de nourriture, ...).

Après une éventuelle phase d'apprentissage, il sera aisé d'anticiper sur l'activité du restaurant du club. En outre, le système de l'invention permet d'alimenter un module d'analyse statistique associé au serveur 40 et permettant par exemple d'effectuer des statistiques de temps de jeu en fonction de tels ou tels paramètres ou circonstances.

### Marketing personnalisé sur le parcours

Par exemple en fonction des comportements enregistrés pour les joueurs de façon individualisée ou catégorisée, le gestionnaire du club de golf pourra émettre des messages écrits/vidéo adaptés aux attentes de la personne : promotions au niveau du restaurant, etc.

Inversement, le gestionnaire pourra décider de désactiver tout message direct adressé au joueur si l'historique montre que celui-ci n'utilise jamais la borne comme dispositif de saisie. La borne reste dans ce cas la plus « discrète » possible (affichage seul des horaires de passage).

### Compétition

Comme on l'a vu, la saisie et l'affichage des scores en direct lors d'une compétition sont simplifiés grâce à la possibilité pour les joueurs de saisir leurs scores sur une borne.

Bien entendu, les scores saisis seront automatiquement affectés aux joueurs présents dans la zone de couverture de la borne. De même, l'affichage du classement peut privilégier ou mettre en avant les scores concernant les joueurs qui sont actuellement détectés dans la zone de couverture.

### Aspects environnementaux

Le système de l'invention, au niveau des bornes et des transpondeurs, est avantageusement autonome en énergie (notamment grâce au recours à des panneaux solaires au niveau des bornes). En outre, il permet de réduire certains temps d'intervention des membres du personnel du golf, il évite les tranchées ou les lignes aériennes, et peut s'intégrer à l'environnement sans le perturber.

Bien entendu de nombreuses modifications peuvent être apportées à l'invention.

## Revendications

1. Système de localisation et d'identification d'au moins un joueur sur un parcours de golf **caractérisé en ce que** le système comprend :
au moins un transpondeur (50, 60, 70, 80, 90, 100) d'identification miniature autonome opérant par communication sans fil de proximité, dans lequel est mémorisé un identifiant, placé de façon amovible sur le joueur et/ou sur son équipement pour sa localisation et son identification,
au moins une borne fixe (10, 20, 30) comprenant un circuit d'interrogation sans fil du transpondeur, à zone de couverture limitée, pour recevoir l'identifiant émis par ledit transpondeur,
un serveur central (40), et
des moyens de communication sans fil entre la ou chaque borne et le serveur central, aptes à véhiculer à partir de la ou chaque borne vers le serveur central un identifiant reçu par son circuit d'interrogation.

2. Système selon la revendication 1, dans lequel les moyens de communication sans fil sont également aptes à véhiculer du serveur central vers la ou chaque borne des informations à afficher, et dans lequel la ou chaque borne (10, 20, 30) comprend un dispositif d'affichage (11) pour ces informations.

3. Système selon la revendication 2, dans lequel le serveur est apte à engendrer des informations à afficher à destination d'une borne, qui sont déterminées en fonction d'un identifiant reçu par ledit serveur à partir de ladite borne.

4. Système selon la revendication 3, dans lequel lesdites informations à afficher comprennent un horaire théorique de passage pour le joueur identifié par ledit identifiant.

5. Système selon la revendication 4, dans lequel lesdites informations comprennent en outre un écart entre ledit horaire théorique et l'horaire effectif auquel l'identifiant a été lu par la borne.

6. Système selon l'une des revendications 2 à 5, dans lequel les informations à afficher comprennent un horaire de départ à afficher sur des moyens d'affichage d'une borne.

7. Système selon l'une des revendications 2 à 6, dans lequel les informations à afficher comprennent en outre des instructions aux joueurs.

8. Système selon l'une des revendications 1 à 7, dans lequel la ou chaque borne fixe (10, 20, 30) comprend une interface d'entrée permettant la saisie d'un score pour transmission vers le serveur central par la borne, et en ce que le serveur central comprend un dispositif de tenue à jour de scores en temps réel ou quasi-réel à partir des scores reçus.

9. Système selon l'une des revendications 1 à 8, comprenant plusieurs bornes prévues dans les zones de départ d'une pluralité de trous du parcours.

10. Système selon l'une des revendications 1 à 9, dans lequel chaque transpondeur est fixé sur un support choisi dans un groupe comprenant un sac de golf, une voiturette, un vêtement, un accessoire à porter, un badge à fixer sur sac de golf, une carte de score, un macaron, un justificatif de paiement de droit de jeu (« green-fee »).

11. Système selon l'une des revendications 1 à 10, **caractérisé en ce qu'**il comprend en outre un dispositif de pilotage d'irrigation commandé en fonction de la détection de transpondeurs au niveau de la ou des bornes.

12. Système selon l'une des revendications 1 à 11, lequel comprend en outre des transpondeurs attachés à des membres du personnel du golf ou des machines d'entretien.

13. Système selon l'une des revendications 1 à 12, dans lequel la ou chaque borne comprend en outre un dispositif de prise de vues pour transmission vers le serveur central, et en ce que ce dernier est associé à un réseau de télévision local.

14. Procédé de localisation et d'identification d'au moins un joueur sur un parcours de golf, le procédé comprenant les étapes suivantes :
- prévoir au moins un transpondeur d'identification miniature amovible autonome opérant par communication sans fil de proximité, dans lequel est mémorisé un identifiant, en vue de la localisation ou de l'identification du joueur,
- attacher le transpondeur de façon amovible sur le joueur ou sur un élément de son équipement,
- interroger localement le transpondeur par communication sans fil à courte portée et recevoir l'identifiant au niveau d'au moins une borne fixe,
- communiquer l'identifiant à partir de la ou chaque borne vers un serveur central par communication sans fil à longue portée.

15. Procédé selon la revendication 14, **caractérisé en ce que** l'étape consistant à attacher le transpondeur de façon amovible sur le joueur ou son équipement comprend la pose du transpondeur sur une carte de droit de jeu.
